# DEMANDE DE BREVET EUROPEEN

(11) **EP 1 129 924 A1**
(43) Date de publication de la demande: **05.09.2001**
(21) Numéro de dépôt: 01400350.3
(22) Date de dépôt: 09.02.2001
(51) Int. Cl.: B62D 1/185

(54) **Ensemble de colonne de direction réglable en position, notamment pour véhicule automobile**

(30) Priorité: 29.02.2000 FR 0002568
(71) Demandeur: Faurecia Industries, 92100 Boulogne-Billancourt (FR)
(72) Inventeur: Mouhot, Frédéric, 25420 Voujeaucourt (FR)
(74) Mandataire: Habasque, Etienne Joel Jean-François

(57) **Abrégé**

Cet ensemble comportant des moyens de fixation (3,4) sur le reste de la structure (2) du véhicule, disposés à proximité de ses extrémités, c'est-à-dire à proximité de sa première extrémité adaptée pour recevoir un volant de direction et à proximité de sa seconde extrémité adaptée pour être reliée au reste du mécanisme de direction du véhicule, les moyens de fixation (3) prévus à la première extrémité de l'ensemble comportant des moyens de fixation permettant au moins un réglage en position axiale de celle-ci par rapprochement axial des extrémités de l'ensemble, est caractérisé en ce qu'il comprend au moins une patte de rigidification (17) dont une première extrémité (18) est reliée rigidement à la première extrémité de l'ensemble et dont une seconde extrémité (19) est associée à la seconde extrémité de cet ensemble par l'intermédiaire de moyens (21,22,24) de guidage en déplacement axial, pour rigidifier l'ensemble, et autoriser le déplacement de la première extrémité par rapport à sa seconde extrémité, afin de permettre son réglage en position.

## Description

La présente invention concerne un ensemble de colonne de direction réglable en position, notamment pour véhicule automobile.

On connaît déjà dans l'état de la technique, des ensembles de colonne de direction de ce type, qui comportent des moyens de fixation de celui-ci sur le reste de la structure du véhicule, disposés à proximité de chacune des extrémités de cet ensemble, c'est-à-dire à proximité de sa première extrémité adaptée pour recevoir le volant de direction et à proximité de sa seconde extrémité adaptée pour être reliée au reste du mécanisme de direction du véhicule.

Dans ce type d'ensembles, les moyens de fixation prévus à proximité de la première extrémité de l'ensemble de colonne comprennent des moyens de fixation permettant un réglage au moins en position axiale de cette première extrémité par rapport à la seconde extrémité de celui-ci.

Un réglage en position angulaire de l'ensemble peut également être envisagé.

Différentes contraintes relatives notamment à la sécurité de ces ensembles de colonne, amènent les constructeurs de véhicules automobiles à souhaiter des ensembles de colonne dont l'encombrement axial soit le plus réduit possible tout en présentant une course de réglage axiale la plus longue possible.

Or, les ensembles de colonne connus sont basés sur l'utilisation d'arbres et de corps de colonne de direction télescopiques, c'est-à-dire qui comportent chacun deux portions télescopiques à coulissement l'une dans l'autre lors des réglages axiaux de celui-ci.

Les contraintes mentionnées précédemment se traduisent alors par une réduction des longueurs de ces portions d'arbre et de corps, encastrées les unes dans les autres, réduction qui se traduit à son tour notamment par des problèmes de rigidité de l'ensemble de colonne.

Le but de l'invention est donc de résoudre ces problèmes.

A cet effet, l'invention a pour objet un ensemble de colonne de direction réglable en position, notamment pour véhicule automobile, du type comportant des moyens de fixation de celui-ci sur le reste de la structure du véhicule, disposés à proximité de chacune des extrémités de cet ensemble, c'est-à-dire à proximité de sa première extrémité adaptée pour recevoir un volant de direction et à proximité de sa seconde extrémité adaptée pour être reliée au reste du mécanisme de direction du véhicule, les moyens de fixation prévus à proximité de la première extrémité de l'ensemble de colonne comportant des moyens de fixation permettant au moins un réglage en position axiale de celle-ci par rapprochement axial des extrémités de l'ensemble, caractérisé en ce qu'il comprend au moins une patte de rigidification dont une première extrémité est reliée rigidement à la première extrémité de l'ensemble de colonne et dont une seconde extrémité est associée à la seconde extrémité de cet ensemble de colonne par l'intermédiaire de moyens de guidage en déplacement axial, pour d'une part, rigidifier l'ensemble de colonne, et d'autre part, autoriser le déplacement de la première extrémité de cet ensemble par rapport à sa seconde extrémité, afin de permettre son réglage en position axiale.

L'invention sera mieux comprise à l'aide de la description qui va suivre, donnée uniquement à titre d'exemple et faite en se référant aux dessins annexés, sur lesquels :
- la Fig.1 représente une vue schématique de côté en coupe partielle d'un exemple de réalisation d'un ensemble de colonne selon l'invention ; et
- la Fig.2 représente une vue en coupe de moyens de guidage entrant dans la constitution de celui-ci.

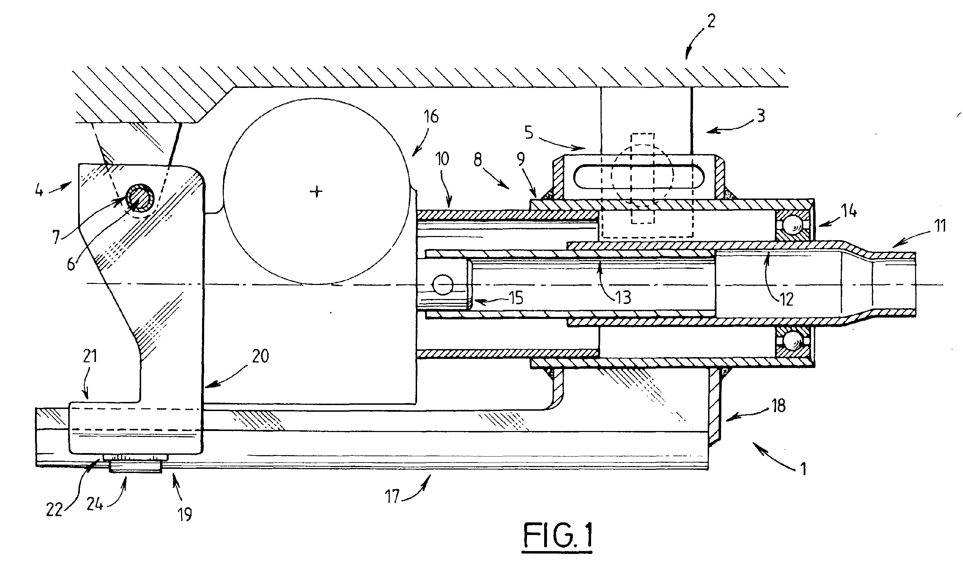

On reconnaît en effet sur cette figure 1, un ensemble de colonne de direction réglable en position, notamment pour véhicule automobile, désigné par la référence générale 1.

Cet ensemble de colonne comporte des moyens de fixation de celui-ci sur le reste de la structure du véhicule, désignée par la référence générale 2, disposés à proximité de chacune des extrémités de cet ensemble, c'est-à-dire à proximité de sa première extrémité adaptée pour recevoir un volant de direction du véhicule et à proximité de sa seconde extrémité adaptée pour être reliée au reste du mécanisme de direction du véhicule.

Les moyens de fixation prévus à proximité de la première extrémité de cet ensemble de colonne sont désignés par la référence générale 3, tandis que les moyens de fixation disposés à proximité de la seconde extrémité de celui-ci sont désignés par la référence générale 4.

On notera que dans cet exemple de réalisation, l'ensemble de colonne est un ensemble de colonne de direction à réglage en positions axiale et angulaire.

Dans ce cas, les moyens de fixation 3 prévus à la première extrémité de l'ensemble de colonne sont associés par exemple à des moyens de blocage 5 de type connu, déplaçables par un utilisateur par exemple entre des positions de verrouillage et de déverrouillage, permettant respectivement de bloquer l'ensemble en position par rapport à la structure du véhicule et de régler celui-ci par exemple en positions axiale et angulaire de façon classique.

Les moyens de fixation 4 prévus à l'autre extrémité de cet ensemble comprennent alors par exemple une tige d'articulation associée à des canons de pivotement, comme cela est représenté, la tige étant désignée par la référence générale 6 et étant reliée au reste de la structure du véhicule 2 et un canon de pivotement étant désigné par la référence générale 7 et étant formé dans l'ensemble de colonne.

Sur cette figure 1, l'ensemble de colonne de direction comporte également un corps de colonne de direction désigné par la référence générale 8, comportant deux portions télescopiques l'une dans l'autre, respectivement 9 et 10, dans lequel est disposé un arbre de direction désigné par la référence générale 11 et qui comporte également deux portions télescopiques l'une dans l'autre, 12 et 13.

Des moyens de roulement, par exemple 14, sont interposés entre la portion de corps de colonne 9 et la portion correspondante 12 d'arbre de direction.

L'autre portion d'arbre de direction désignée par la référence générale 13 est reliée par exemple par l'intermédiaire d'une queue d'accouplement 15 à des moyens d'assistance de direction désignés par la référence générale 16 et qui présentent n'importe quelle structure appropriée.

Selon l'invention, cet ensemble de colonne comporte également au moins une patte de rigidification désignée par la référence générale 17 sur cette figure, dont une première extrémité 18 est reliée rigidement à la première extrémité de l'ensemble de colonne de direction et plus particulièrement à la portion 9 de corps de colonne et dont la seconde extrémité désignée par la référence générale 19, est associée à la seconde extrémité de cet ensemble de colonne par l'intermédiaire de moyens de guidage en déplacement axial, pour d'une part, rigidifier l'ensemble de colonne, et d'autre part, autoriser le déplacement de la première extrémité de cet ensemble par rapport à sa seconde extrémité, afin de permettre son réglage en position axiale.

A cet effet, la seconde extrémité de l'ensemble de colonne comporte une ferrure de support, désignée par la référence générale 20 sur cette figure, dont l'extrémité correspondante est associée à la seconde extrémité de la patte de rigidification, par des moyens de guidage en déplacement axial.

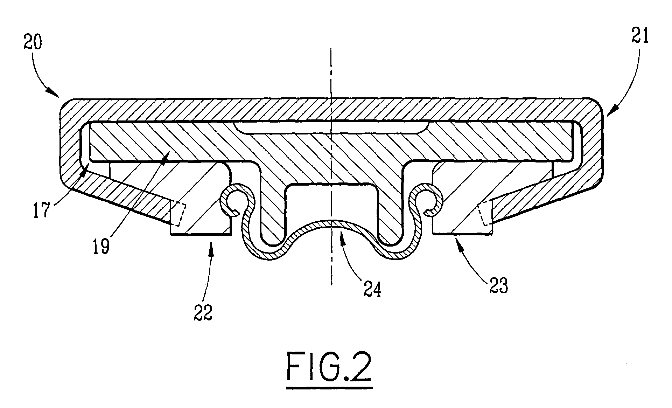

Un exemple de réalisation de la liaison entre cette ferrure 20 et la seconde extrémité 19 de la patte de rigidification 17 est illustré sur la figure 2.

On reconnaît en effet sur cette figure 2, la seconde extrémité 19 de la patte de rigidification 17 et l'extrémité correspondante de la ferrure 20 de l'ensemble de colonne.

En fait, cette extrémité correspondante de la ferrure 20 se présente sous la forme d'un rail désigné par la référence générale 21 sur cette figure, adapté pour recevoir à coulissement l'extrémité correspondante 19 de la patte de rigidification 17, des moyens de rattrapage automatique des jeux étant prévus entre ce rail et cette extrémité de la patte.

Dans l'exemple de réalisation représenté, ces moyens de rattrapage de jeux comprennent deux patins en forme de coin disposés symétriquement l'un par rapport à l'autre entre le rail et la patte et désignés par les références générales 22 et 23.

Un organe de sollicitation élastique constitué par exemple par une lame à ressort, désigné par la référence générale 24, est interposé entre ces deux patins pour plaquer ceux-ci entre le rail et l'extrémité de la patte afin de rattraper les jeux entre ces pièces tout en autorisant le coulissement axial de la patte par rapport au rail.

Il va de soi bien entendu que d'autres modes de réalisation encore peuvent être envisagés.

On conçoit alors que lorsque les moyens de blocage de l'ensemble de colonne sont en position de déverrouillage, l'utilisateur de celui-ci peut régler l'ensemble de colonne en positions angulaire et/ou axiale.

Lors d'un réglage en position axiale, les portions de corps et d'arbre de direction se déplacent à coulissement l'une par rapport à l'autre.

La patte de rigidification 17 et plus particulièrement sa seconde extrémité 19 se déplacent également par rapport à la ferrure 20 en coulissant sans jeu par rapport à celle-ci.

Cette patte de rigidification permet donc d'une part, de rigidifier l'ensemble de colonne et d'autre part, d'autoriser le déplacement de la première extrémité de l'ensemble de colonne par rapport à sa seconde extrémité, afin de permettre le réglage en position axiale de celle-ci et donc du volant de direction du véhicule.

## Revendications

1. Ensemble de colonne de direction réglable en position, notamment pour véhicule automobile, du type comportant des moyens de fixation (3,4) de celui-ci sur le reste de la structure (2) du véhicule, disposés à proximité de chacune des extrémités de cet ensemble, c'est-à-dire à proximité de sa première extrémité adaptée pour recevoir un volant de direction du véhicule et à proximité de sa seconde extrémité adaptée pour être reliée au reste du mécanisme de direction du véhicule, les moyens de fixation (3) prévus à proximité de la première extrémité de l'ensemble de colonne comportant des moyens de fixation permettant au moins un réglage en position axiale de celle-ci par rapprochement axial des extrémités de l'ensemble, **caractérisé en ce qu**'il comprend au moins une patte de rigidification (17) dont une première extrémité (18) est reliée rigidement à la première extrémité de l'ensemble de colonne et dont la seconde extrémité (19) est associée à la seconde extrémité de cet ensemble de colonne par l'intermédiaire de moyens (21,22,23,24) de guidage en déplacement axial, pour d'une part, rigidifier l'ensemble de colonne, et d'autre part, autoriser le déplacement de la première extrémité de cet ensemble par rapport à sa seconde extrémité, afin de permettre son réglage en position axiale.

2. Ensemble selon la revendication 1, **caractérisé en ce que** la première extrémité (18) de la patte de rigidification (17) est fixée rigidement sur une portion (9) de corps de colonne de direction de l'ensemble.

3. Ensemble selon la revendication 1 ou 2, **caractérisé en ce que** la seconde extrémité (19) de la patte de rigidification (17) est montée déplaçable dans un rail (21) d'une ferrure (20) de la seconde extrémité de l'ensemble de colonne et en ce qu'il est prévu des moyens (22,23,24) de rattrapage des jeux entre ce rail et cette seconde extrémité de la patte de rigidification.

4. Ensemble selon la revendication 3, **caractérisé en ce que** les moyens de rattrapage des jeux comprennent deux patins en forme de coin (22,23) disposés symétriquement entre le rail (21) et la seconde extrémité (19) de la patte de rigidification (17), et en ce qu'il est prévu des moyens élastiques (24) de sollicitation de ces patins entre ces pièces.

5. Ensemble selon l'une quelconque des revendications précédentes, **caractérisé en ce qu**'il comporte des moyens (16) d'assistance de direction.

6. Ensemble selon l'une quelconque des revendications précédentes, **caractérisé en ce que** les moyens de fixation prévus à la première extrémité de l'ensemble sont également adaptés pour permettre un réglage en position angulaire de celui-ci, la seconde extrémité de l'ensemble de colonne étant reliée au reste de la structure (2) du véhicule par des moyens d'articulation (6,7).
